# EUROPÄISCHE PATENTSCHRIFT

(11) **EP 2 870 009 B1**
(45) Veröffentlichungstag und Bekanntmachung des Hinweises auf die Patenterteilung: **21.02.2018**
(21) Anmeldenummer: 13727873.5
(22) Anmeldetag: 06.06.2013
(51) Int. Cl.: B60G 9/02, B60G 7/00

(54) **KRAFTFAHRZEUG MIT FAHRZEUGRAHMEN UND GELENKANORDNUNG**
MOTOR CAR WITH CHASSIS AND ARTICULATION ARRANGEMENT
VOITURE AUTOMOBILE AVEC CHASSIS ET ARRANGEMENT D'ARTICULATION

(30) Priorität: 03.07.2012 DE 102012013149
(43) Veröffentlichungstag der Anmeldung: 13.05.2015
(73) Patentinhaber: ZF Friedrichshafen AG, 88046 Friedrichshafen (DE)
(72) Erfinder: LANGHORST, Friedhelm, 49356 Diepholz (DE); EISMANN, Jens, 49326 Melle (DE); SCHEPER, Frank, 49624 Loeningen (DE); KNOPP, Sören, DE-32351 Stemwede (DE)
(86) Internationale Anmeldenummer: PCT/EP2013/061676
(87) Internationale Veröffentlichungsnummer: WO 2014/005787

(56) Entgegenhaltungen:
- EP-A1- 1 120 299
- JP-A- H11 321 260
- US-A1- 2003 089 546
- US-A1- 2009 134 593

## Beschreibung

Die Erfindung betrifft ein Kraftfahrzeug, insbesondere einen Nutzkraftwagen (NKW), nach dem Oberbegriff des Anspruchs 1.

Es ist bekannt, derartige Abstützungen beispielsweise über eine Dreiecklenkeranordnung zu erreichen, die mit der Dreieckspitze über eine Gelenkanordnung mit einem in der Mitte kugelförmig erweiterten Achskörper mit einem der Achse, zum Beispiel der Hinterachse, zugeordneten Widerlager verschraubt ist. Die Schrauben durchdringen hierfür axial außen den Achskörper der Gelenkanordnung und das Widerlager. Dabei durchdringen die Schrauben die Kontaktflächen lotrecht, so dass an der Kontaktfläche nur ca. 10 % der aufgebrachten Schraubkraft als Normalkraft übertragen werden. Diese vorspannende Normalkraft verhindert jedoch, dass sich die an den Kontaktflächen verbundenen Teile in einer Richtung in der Ebene der Kontaktflächen gegeneinander bewegen können. Somit ist es wichtig, eine hinreichend hohe Normalkraft sicherzustellen.

Da jedoch die Reibwerte an den Kontaktflächen hohen Schwankungen unterliegen (It. Literatur ca. um einen Faktor drei), ist es erforderlich, derartige Verbindungen überdimensioniert auszubilden, um ein Lösen der Verbindungen auch unter hoher Krafteinleitung quer zur Achse der Verbindungsmittel zuverlässig zu unterbinden. Dies verursacht hohe Materialkosten und zusätzliches Gewicht der Teile.

Aus der US 2009/0134593 A1 ist ein Kraftfahrzeug nach dem Oberbegriff des Anspruchs 1 bekannt. Nachteilig an der darin offenbarten Dreieckslenkeranordnung ist jedoch deren aufwändiger Aufbau.

Der Erfindung liegt das Problem zugrunde, hier eine Verbesserung zu erreichen.

Die Erfindung löst dieses Problem durch ein Kraftfahrzeug mit den Merkmalen des Anspruchs 1 sowie durch eine Gelenkanordnung mit den Merkmalen des Anspruchs 6. Hinsichtlich vorteilhafter Ausgestaltungen und Weiterbildungen der Erfindung wird auf die weiteren Ansprüche 2 bis 5 und 7 verwiesen.

Durch die Erfindung ist dadurch, dass an den Kontaktflächen die Achse des jeweiligen Verbindungsmittels die von ihm durchsetzte Kontaktfläche in einem von 90° abweichenden Winkel durchläuft, erreicht, dass die Kraft der Schraubverbindung in eine Normal- und eine Querkomponente unterteilt wird. Es ergibt sich somit ein formschlüssiger Anteil, der es erlaubt, den Anteil der Vorspannung erheblich zu erhöhen. Dadurch kann einerseits die Schraubennenngröße verringert werden, was Materialkosten und Gewicht verringert. Außerdem kann das Anzugsverfahren für die Schraubverbindung deutlich weniger genau gewählt werden, so dass die Verfahrenskosten verringert und die Zuverlässigkeit der Verbindung erhöht sind. Durch die kleinere Schraube kann auch der Achskörper im Gelenk geringer dimensioniert werden, wodurch Gewicht und Kosten weiter gesenkt werden. Zudem können auch an die Oberflächengüte verminderte Anforderungen gestellt werden.

Um eine möglichst hohe Vorspannung zu erzeugen, ist es günstig, wenn die jeweilige Achse des Verbindungsmittels die von ihm durchsetzte Kontaktfläche in einem Winkel zwischen 30° und 60° gegenüber einem in der Kontaktfläche liegenden Vektor durchläuft.

Insbesondere kann für eine optimale Kombination zwischen Kraftschluss und Formschluss die jeweilige Achse des Verbindungsmittels die von ihm durchsetzte Kontaktfläche in einem Winkel von ca. 45° gegenüber einem in der Kontaktfläche liegenden Vektor durchlaufen.

Sofern die Kontaktflächen in Draufsicht gewinkelt zu einer Fahrzeuglängsachse und zu einer Fahrzeugquerachse stehen, wirken auch die Hauptkraftrichtungen zwischen Achse und Fahrzeugrahmen, nämlich Quer- und Längsbewegungen, jeweils abgewinkelt zu den Kontaktflächen und fördern daher weniger das Abscheren der dort verbundenen Teile gegeneinander, so dass eine zusätzliche Sicherheit der Verbindung erreicht ist. Zu einer solchen Sicherheit gegen eine Krafteinwirkung in der Ebene der Kontaktflächen trägt auch bei, wenn die Kontaktflächen mit Riffelungen oder ähnlichen Maßnahmen zur Reibungserhöhung versehen sind.

Insbesondere stehen pro Gelenkanordnung zwei axial außen liegende Kontaktflächen gegenüber einer Fahrzeugquerachse gegensätzlich zueinander angewinkelt und können somit wie äußere Wandungen die dazwischen liegende Gelenkanordnung einfassen.

Diese kann günstig eine sog. Pratze mit einem ein Kugelstück umfassenden Achskörper ausbilden, wobei der Achskörper axial außen mit Kontaktflächen und Ausnehmungen für Verbindungsmittel versehen ist.

Eine Gelenk- und/oder Lageranordnung ist gesondert beansprucht. Diese kann in Fahrzeugen wie PKW oder NKW oder auch Baumaschinen eingesetzt sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Draufsicht auf einen Nutzkraftwagen mit einer über einen Dreieckslenker abgestützten Hinterachse,

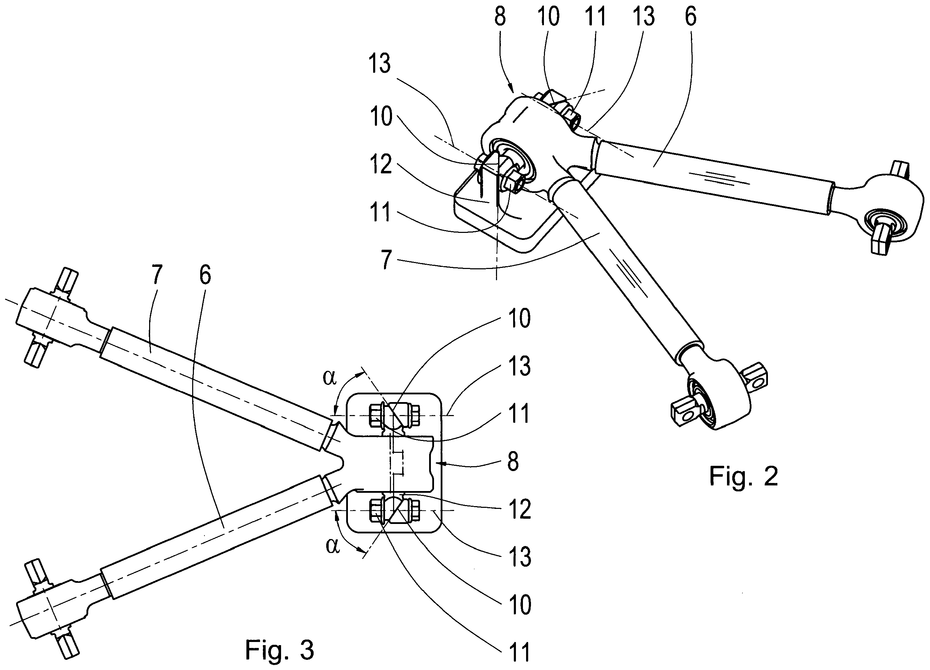

- Fig. 2: eine perspektivische Ansicht des Dreieckslenkers mit seiner Anbindung an die Hinterachse,
- Fig. 3: die Teile nach Figur 2 in Ansicht von oben,
- Fig. 4: ein Detail der Anbindung der Gelenkanordnung an die Hinterachse in Draufsicht, wobei hier von der Gelenkanordnung nur der quermittig kugelförmig erweiterte Achskörper dargestellt ist, mit zusätzlich eingezeichneten Kraftvektoren,
- Fig. 5: die Anbindung des Achskörpers über die Kontaktflächen in Ansicht von vorne,
- Fig. 6: eine schematische Darstellung eines mit Riffelungen versehenen Achskörpers der Gelenkanordnung, mit vergrößerten Detailausschnitten vor und nach der Montage.

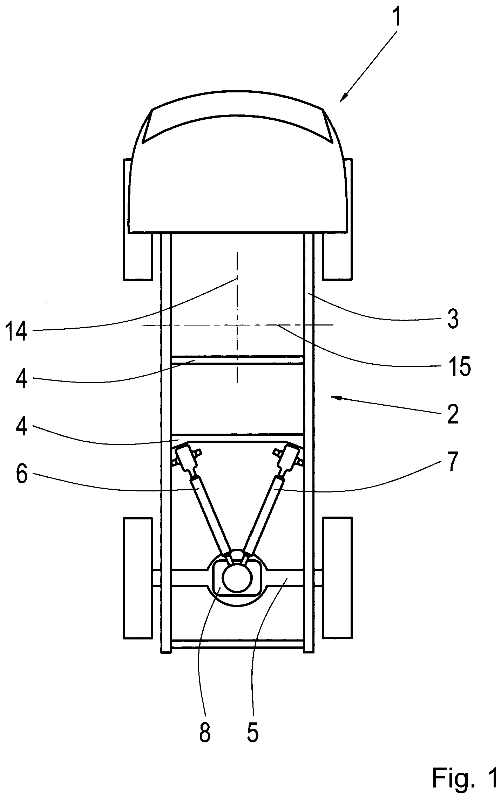

Das in Figur 1 schematisch dargestellte Kraftfahrzeug 1 bildet hier einen Nutzkraftwagen (NKW) aus und weist einen Fahrzeugrahmen 2 mit Längsträgern 3 und Querträgern 4 auf. Der Fahrzeugrahmen 2 kann unterschiedliche Ausbildungen haben. An dem Fahrzeugrahmen ist zumindest eine Achse 5, zum Beispiel eine Hinterachse, gehalten. Auch beispielsweise ein Baufahrzeug oder ein Offroadfahrzeug kann erfindungsgemäß ausgebildet sein.

Die dort dargestellte Anordnung umfasst zwei in einer Dreieckslenkeranordnung spitzwinklig und in Draufsicht V-förmig aufeinander zulaufende Lenker 6, 7. An der so gebildeten Dreiecksspitze greifen diese mittels einer Gelenkanordnung 8 an der Fahrzeugachse 5 an. Diese ist im bezüglich der Fahrzeugquerrichtung mittleren Bereich zur Aufnahme eines Differentials erweitert. Die Gelenkanordnung 8 kann damit auf dem oberen Ende dieses zur Aufnahme eines Differentials erweiterten Bereichs der Hinterachse 5 montierbar sein und somit eine Querführung und Längsführung für diese Fahrzeugachse 5 bilden. Die hier zwei abstützenden Lenker 6, 7 können selbst in ihren oberen Bereichen an zum Beispiel die tragenden Längsrahmenteilen 3 angebunden sein - hier nicht näher eingezeichnet. Anstelle von Dreieckslenkeranordnungen können beispielsweise auch Vierpunktlenker mit einer X-Form in Draufsicht oder andere Anordnungen in Betracht kommen.

Die Gelenkanordnungen 8 werden häufig auch als sog. Pratzen bezeichnet. Eine solche Gelenkanordnung 8 umfasst einen ein Kugelstück umfassenden Achskörper 9, der quer außen mit Kontaktflächen 10 und Ausnehmungen für Verbindungsmittel 11 versehen ist.

Die Verbindungsmittel 11 sind in der Zeichnung als gekonterte Schrauben ausgebildet und durchsetzen die Kontaktflächen 10 der Gelenkanordnung 8 sowie gegenüberliegende Kontaktflächen 10 eines fest mit der Achse 5 verbundenen Widerlagers 12. Dabei steht die Achse 13 des jeweiligen Verbindungsmittels 11 gegenüber der von ihm durchsetzten Kontaktfläche 10 in einem von 90° abweichenden Winkel α.

Dieser Winkel α beträgt zwischen 30° und 60° gegenüber einem in de r Kontaktfläche 10 liegenden Vektor.

Optimalerweise durchläuft die jeweilige Achse 13 des Verbindungsmittels 11 die von ihm durchsetzte Kontaktfläche 10 in einem Winkel von ca. 45° gegenüber einem in der Kontaktfläche 10 liegenden Vektor. Dann ist eine optimierte Aufteilung zwischen Formschluss und Kraftschluss erreicht. Die hauptsächlich auftretenden Kräfte parallel zur Fahrzeuglängsachse 14 oder parallel zu einer Fahrzeugquerachse 15 können in gleicher Weise gut abgefangen werden.

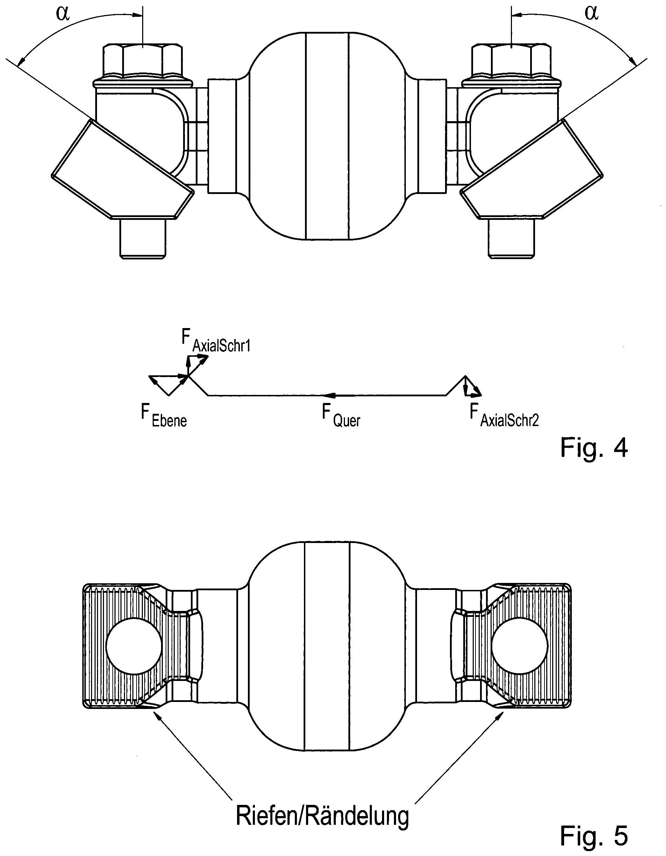

Für den formschlüssigen Anteil ist es dabei besonders günstig, wenn die Kontaktflächen 10 in Draufsicht gewinkelt zu einer Fahrzeuglängsachse 14 und zu einer Fahrzeugquerachse 15, insbesondere derart, dass pro Gelenkanordnung 8 zwei axial außen liegende Kontaktflächen 10 zwischen Achskörper 9 und Widerlager 12 vorgesehen sind und diese gegenüber einer Fahrzeugquerachse 15 gegensätzlich zueinander angewinkelt stehen, wie etwa in Figur 4 gut zu erkennen ist. Zu jeder Kraft in Querrichtung ist daher eine gleich gute Abstützung der Gelenkanordnung 8 gewährleistet.

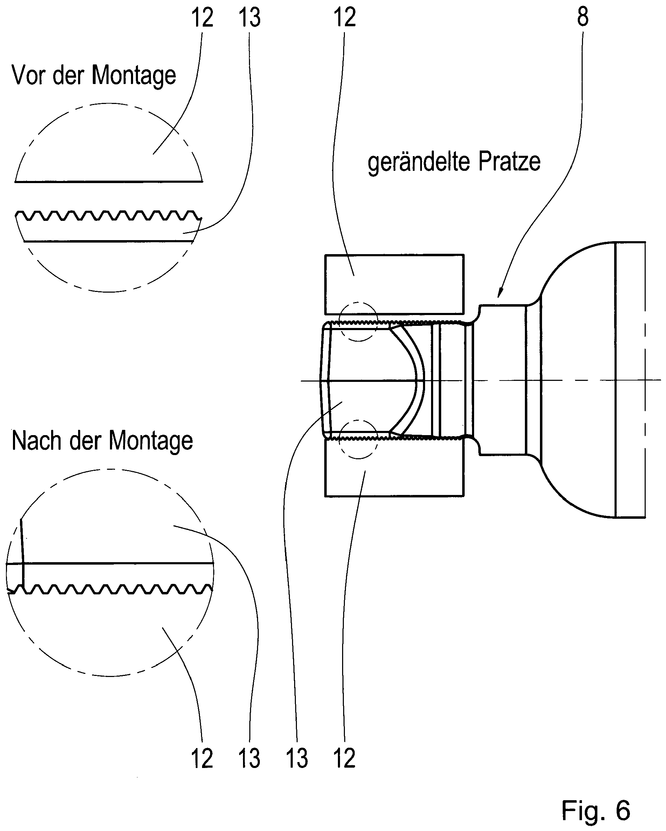

Weiter kann der Reibungskoeffizient der Kontaktflächen 10 dadurch vergrößert werden, dass Kontaktflächen mit Riffelungen 16 versehen sind, wie etwa in den Figuren 5 und 6 eingezeichnet ist. Die Riffelungen 16 des harten Achskörpers 9 können sich während der Montage (sh. Figur 6 links: vor der Montage, nach der Montage) in das weichere Widerlager 12 eindrücken, so dass dieses eine Negativkontur der Riffelungen 16 erhält, die eine formschlüssige Sicherung bewirken.

Es ist zudem nicht erfindungsgemäß auch möglich, dass die Kontaktflächen 10 nicht jeweils geradlinig verlaufen, sondern eine Kontaktfläche in sich gekrümmt verläuft, zum Beispiel konkav mit einer nach außen hin anwachsenden Steigung.

Eine Gelenkanordnung 8, wie beschrieben, kann an verschiedenen Stellen, insbesondere innerhalb von Fahrwerksteilen oder zu deren Anbindung, an einem Kraftfahrzeug 1 vorgesehen sein und ist daher gesondert beansprucht.

### Bezugszeichen

- 1: Kraftfahrzeug,
- 2: Fahrzeugrahmen,
- 3: Längsträger,
- 4: Querträger,
- 5: Fahrzeugachse,
- 6: Lenker,
- 7: Lenker,
- 8: Gelenkanordnung,
- 9: Achskörper,
- 10: Kontaktflächen,
- 11: Verbindungsmittel,
- 12: Widerlager,
- 13: Achse des Verbindungsmittels,
- 14: Längsachse,
- 15: Querachse,
- 16: Riffelungen,
- 17: Achskörper der Gelenkanordnung

## Patentansprüche

1. Kraftfahrzeug, insbesondere Nutzkraftwagen (NKW), mit einem Fahrzeugrahmen (2) und zumindest einer gegenüber dem Fahrzeugrahmen (2) über einen oder mehrere Lenker (6;7) abgestützten Fahrzeugachse (5), wobei der oder die Lenker (6;7) an die Fahrzeugachse (5) über zumindest eine Gelenkanordnung (8) angebunden ist, die über Verbindungsmittel (11) mit einem fest zur Achse (5) stehenden Widerlager (12) verbunden ist, wobei die Verbindungsmittel (11) jeweils gegenüberliegende Kontaktflächen (10) der Gelenkanordnung (8) bzw. des Widerlagers (12) durchsetzen und miteinander verbinden, **dadurch gekennzeichnet, dass** die jeweils einem Lenker (6; 7) zugeordneten Kontaktflächen (10) in einer Ebene liegen, und dass die Achse (13) des jeweiligen Verbindungsmittels (11) die Ebene, in der die von ihm durchsetzten Kontaktflächen (10) liegen, in einem von 90° abweichenden Winkel (α) durchläuft.

2. Kraftfahrzeug (1) nach Anspruch 1, **dadurch gekennzeichnet, dass** die jeweilige Achse (13) des Verbindungsmittels (11) die von ihm durchsetzte Kontaktfläche (10) in einem Winkel (α) zwischen 30° und 60° gegenüber einem in der Konta ktfläche (10) liegenden Vektor durchläuft.

3. Kraftfahrzeug (1) nach Anspruch 2, **dadurch gekennzeichnet, dass** die jeweilige Achse (13) des Verbindungsmittels (11) die von ihm durchsetzte Kontaktfläche (10) in einem Winkel von ca. 45° gegenüber einem in der Kontaktfläche (10) liegenden Vektor durchläuft.

4. Kraftfahrzeug (1) nach einem der Ansprüche 1 bis 3, **dadurch gekennzeichnet, dass** die Verbindungsmittel (11) durch gekonterte Schrauben gebildet sind.

5. Kraftfahrzeug (1) nach einem der Ansprüche 1 bis 4, **dadurch gekennzeichnet, dass** die Kontaktflächen (10) in Draufsicht gewinkelt zu einer Fahrzeuglängsachse (14) und zu einer Fahrzeugquerachse (15) stehen.

6. Gelenkanordnung (8) zum Einsatz in einem Kraftfahrzeug (1) nach einem der Ansprüche 1 bis 5, wobei die Gelenkanordnung (8) eine sog. Pratze mit einer ein Kugelstück umfassenden Achskörper (9) ausbildet und der Achskörper (9) axial außen mit Kontaktflächen (10) und Ausnehmungen für Verbindungsmittel (11) versehen ist, **dadurch gekennzeichnet, dass** pro Gelenkanordnung (8) zwei axial außen liegende Kontaktflächen (10) vorgesehen sind und diese gegenüber einer Fahrzeuglängsachse (14) gegensätzlich zueinander angewinkelt stehen.

7. Gelenkanordnung (8) nach Anspruch 6, **dadurch gekennzeichnet, dass** die Kontaktflächen (10) mit Riffelungen (16) versehen sind.

## Claims

1. Motor vehicle, in particular commercial vehicle (NKW), having a vehicle frame (2) and at least one vehicle axle (5) which is supported via one or more links (6; 7) with respect to the vehicle frame (2), the link or links (6; 7) being attached to the vehicle axle (5) via at least one joint arrangement (8) which is connected via a connecting means (11) to an abutment (12) which is fixed with respect to the axle (5), the connecting means (11) penetrating contact faces (10) of the joint arrangement (8) and the abutment (12) which lie opposite one another in each case, and connecting them to one another, **characterized in that** the contact faces (10) which are assigned to in each case one link (6; 7) lie in one plane, and **in that** the axis (13) of the respective connecting means (11) runs through the plane, in which the contact faces (10) which are penetrated by it lie, at an angle (α) which differs from 90°.

2. Motor vehicle (1) according to Claim 1, **characterized in that** the respective axis (13) of the connecting means (11) runs through the contact face (10) which is penetrated by it at an angle (α) of between 30° and 60° with respect to a vector which lies in the contact face (10).

3. Motor vehicle (1) according to Claim 2, **characterized in that** the respective axis (13) of the connecting means (11) runs through the contact face (10) which is penetrated by it at an angle of approximately 45° with respect to a vector which lies in the contact face (10).

4. Motor vehicle (1) according to one of Claims 1 to 3, **characterized in that** the connecting means (11) are formed by way of bolts which are fixed by a locknut.

5. Motor vehicle (1) according to one of Claims 1 to 4, **characterized in that**, in plan view, the contact faces (10) lie at an angle with respect to a vehicle longitudinal axis (14) and with respect to a vehicle transverse axis (15).

6. Joint arrangement (8) for use in a motor vehicle (1) according to one of Claims 1 to 5, the joint arrangement (8) configuring what is known as a claw with an axle beam (9) which comprises a spherical piece, and the axial beam (9) being provided axially on the outside with contact faces (10) and recesses for connecting means (11), **characterized in that** two contact faces (10) which lie axially on the outside are provided per joint arrangement (8), and the said contact faces (10) lie angled away from one another in an opposed manner with respect to a vehicle longitudinal axis (14).

7. Joint arrangement (8) according to Claim 6, **characterized in that** the contact faces (10) are provided with grooves (16).

## Revendications

1. Véhicule automobile, en particulier véhicule utilitaire (NKW), avec un châssis de véhicule (2) et au moins un essieu de véhicule (5) supporté par rapport au châssis de véhicule (2) par un ou plusieurs bras oscillant (s) (6; 7), dans lequel le ou les bras oscillant(s) (6; 7) est/sont relié(s) à l'essieu de véhicule (5) par au moins un arrangement d'articulation (8), qui est assemblé à un palier (12) calé sur l'essieu (5) au moyen de moyens d'assemblage (11), dans lequel les moyens d'assemblage (11) traversent et relient l'une à l'autre des faces de contact (10) respectivement opposées de l'arrangement d'articulation (8) ou du palier (12), **caractérisé en ce que** les faces de contact (10) respectivement associées à un bras oscillant (6; 7) sont situées dans un plan, et **en ce que** l'axe (13) du moyen d'assemblage respectif (11) traverse sous un angle (α) différent de 90° le plan, dans lequel les faces de contact (10) sont traversés par ce dernier.

2. Véhicule automobile (1) selon la revendication 1, **caractérisé en ce que** l'axe respectif (13) du moyen d'assemblage (11) traverse la face de contact (10) traversée par ce dernier sous un angle (α) compris entre 30° et 60° par rapport à un vecteur situé dans la face de contact (10).

3. Véhicule automobile (1) selon la revendication 2, **caractérisé en ce que** l'axe respectif (13) du moyen d'assemblage (11) traverse la face de contact (10) traversée par ce dernier sous un angle d'environ 45° par rapport à un vecteur situé dans la face de contact (10).

4. Véhicule automobile (1) selon l'une quelconque des revendications 1 à 3, **caractérisé en ce que** les moyens d'assemblage (11) sont formés par des vis avec contre-écrou.

5. Véhicule automobile (1) selon l'une quelconque des revendications 1 à 4, **caractérisé en ce que** les faces de contact (10) sont dans une vue en plan obliques par rapport à un axe longitudinal (14) du véhicule et par rapport à un axe transversal (15) du véhicule.

6. Arrangement d'articulation (8) à utiliser dans un véhicule automobile (1) selon l'une quelconque des revendications 1 à 5, dans lequel l'arrangement d'articulation (8) forme une sorte de griffe avec un corps axial (9) comprenant une pièce sphérique et le corps axial (9) est doté axialement extérieurement de faces de contact (10) et d'évidements pour des moyens d'assemblage (11), **caractérisé en ce qu'**il est prévu par arrangement d'articulation (8) deux faces de contact (10) situées axialement à l'extérieur et celles-ci sont inclinées l'une par rapport à l'autre de façon opposée par rapport à un axe longitudinal (14) du véhicule.

7. Arrangement d'articulation (8) selon la revendication 6, **caractérisé en ce que** les faces de contact (10) sont dotées de cannelures (16).
